# EUROPÄISCHE PATENTSCHRIFT

(11) **EP 2 764 591 B1**
(45) Veröffentlichungstag und Bekanntmachung des Hinweises auf die Patenterteilung: **16.09.2015**
(21) Anmeldenummer: 12784436.3
(22) Anmeldetag: 05.10.2012
(51) Int. Cl.: H02G 3/08, H02G 3/22

(54) **KABELDURCHFÜHRUNG UND VERFAHREN ZUR MONTAGE EINER KABELDURCHFÜHRUNG**
CABLE FEEDTHROUGH AND METHOD FOR ASSEMBLING A CABLE FEEDTHROUGH
TRAVERSÉE DE CÂBLES ET PROCÉDÉ DE MONTAGE D'UNE TRAVERSÉE DE CÂBLES

(30) Priorität: 07.10.2011 DE 102011054294
(43) Veröffentlichungstag der Anmeldung: 13.08.2014
(73) Patentinhaber: Phoenix Contact GmbH & Co. KG, 32825 Blomberg (DE)
(72) Erfinder: Andresen, Jens, 32825 Blomberg (DE); Diessel, Thorsten, 32120 Hiddenhausen (DE); Sprenger, Dennis, 32805 Horn-Bad Meinberg (DE)
(86) Internationale Anmeldenummer: PCT/EP2012/004214
(87) Internationale Veröffentlichungsnummer: WO 2013/050180

(56) Entgegenhaltungen:
- EP-A1- 1 744 425
- DE-A1- 3 428 258
- DE-B3-102005 002 597
- DE-B3-102005 016 340

## Beschreibung

Die Erfindung richtet sich auf eine Kabeldurchführung.. Ferner richtet sich die Erfindung auf ein Verfahren zur Montage einer Kabeldurchführung.

Kabeldurchführungen dienen der Einführung von vorkonfektionierten Steckverbindern in Schaltschränke oder sonstige durch Schottwände getrennte Räume. Da die Steckverbinder geometrisch wesentlich größer sind als der Kabeldurchmesser eines Kabels, ist es notwendig, die zwischen Kabel und dem Wanddurchbruch ausgebildete Lücke dauerhaft zuverlässig, auf einfache Art und Weise und zudem kostengünstig zu schließen. Darüber hinaus wird gefordert, dass möglichst viele und unterschiedliche Kabel auf engstem Raum rangierbar sind.

Es ist bekannt, das an einem Steckverbinder angeordnete Kabel in ein mit einem Dichtungselement versehenes Rahmenelement einzufügen, wobei das Rahmenelement an dem Wanddurchbruch angeordnet wird, um diesen zu schließen. Um das Kabel in dem Dichtungselement, insbesondere in einer Durchgangsöffnung des Dichtungselementes, anordnen zu können, weist das Dichtungselement eine sich von der Durchgangsöffnung zu der Außenfläche des Dichtungselementes erstreckende schlitzförmige Öffnung auf, über welche ein Kabel seitlich in das Dichtungselement eingeschoben und in der Durchgangsöffnung positioniert werden kann. Wird das Kabel dabei nicht richtig ordnungsgemäß in das Dichtungselement eingeführt oder wird ein Dichtungselement gewählt, dessen Durchgangsöffnung zu groß für das eingeführte Kabel ist, kann eine sichere Abdichtung des Kabels mittels des Dichtungselementes der Kabeldurchführung nicht mehr gewährleistet werden.

Eine Kabeldurchführung ist in DE 10 2005 002 597 B3 offenbart.

Der Erfindung liegt daher die Aufgabe zu Grunde, eine Lösung zu schaffen, mittels welcher eine hohe Dichtigkeit einer Kabeldurchführung gewährleistet und zudem eine einfache Montage der Kabeldurchführung zur Verfügung gestellt werden kann.

Bei einer Kabeldurchführung der eingangs näher bezeichneten Art wird diese Aufgabe erfindungsgemäß dadurch gelöst, dass die Kabeldurchführung ein aus mindestens zwei Rahmenteilen ausgebildetes Rahmenelement aufweist, welches einen durch die Rahmenteile abgegrenzten Innenraum ausbildet, wobei in dem Innenraum ein oder mehrere Dichtungselemente angeordnet sind, welche einen Grundkörper mit jeweils einer Durchgangsöffnung zur Durchführung eines Kabels aufweisen, wobei die ein oder mehreren Dichtungselemente in dem Innenraum an einem Rahmenteil und/oder einem weiteren Dichtungselement angeordnet sind und durch Ausbildung einer Presspassung in dem Rahmenelement fixiert sind, wobei ein oder mehrere der Dichtungselemente eine in Verlängerung der Durchgangsöffnung an dem Grundkörper angeformte konusförmige Kabeltülle aufweisen, wobei die konusförmige Kabeltülle stufenförmig abgesetzte Bereiche mit unterschiedlich großen Durchmessern aufweist.

Bei einem Verfahren der eingangs näher bezeichneten Art wird diese Aufgabe erfindungsgemäß dadurch gelöst, dass das Verfahren die folgenden Schritte umfasst:
- Bereitstellen eines Dichtungselementes, welches einen Grundkörper mit einer Durchgangsöffnung aufweist, wobei in Verlängerung der Durchgangsöffnung an dem Grundkörper eine konusförmige Kabeltülle angeformt ist, welche stufenförmig abgesetzte Bereiche mit unterschiedlich großen Durchmessern aufweist,
- Kürzen der konusförmigen Kabeltülle in Abhängigkeit des Außendurchmessers eines in das Dichtungselement durch die Durchgangsöffnung einzuführenden Kabels durch Abtrennen von ein oder mehreren der stufenförmig abgesetzten Bereiche,
- Einführen des Kabels in das Dichtungselement durch die Durchgangsöffnung des Dichtungselementes,
- Anordnen des mit dem Kabel versehenen Dichtungselementes an einem Rahmenteil, und
- Verbinden des Rahmenteiles mit einem oder mehreren weiteren Rahmenteilen zu einem Rahmenelement, so dass das mit dem Kabel versehene Dichtungselement in einem durch die Rahmenteile abgegrenzten Innenraum des Rahmenelementes angeordnet ist und durch Ausbilden einer Presspassung in dem Rahmenelement gehalten ist.

Zweckmäßige Ausgestaltungen und vorteilhafte Weiterbildungen der Erfindung sind in den Unteransprüchen angegeben.

Die Kabeldurchführung gemäß der Erfindung zeichnet sich insbesondere durch eine hohe Dichtigkeit aus. Dies wird zum einen dadurch erreicht, dass die Dichtungselemente, in welchem die Kabel eingeführt sind, in einem Rahmenelement angeordnet sind, welches aus mindestens zwei Rahmenteilen ausgebildet ist, welche zusammenfügbar, insbesondere zusammensteckbar, sind. Dadurch ist eine vereinfachte Anordnung der Dichtungselemente in einem Rahmenelement möglich, da die Rahmenteile erst zusammengefügt werden, wenn die richtigen Dichtungselemente ausgewählt und zwischen den das Rahmenelement ausbildenden Rahmenteilen angeordnet sind. Die Rahmenteile bilden damit die Außenfläche des Rahmenelementes aus und die Dichtungselemente sind von den Rahmenteilen umschlossen. Das Rahmenelement ist vorzugsweise rechteckförmig ausgebildet. Es kann jedoch auch eine andere Form aufweisen, die an den abzudeckenden Wandausschnitt bzw. Wanddurchbruch angepasst ist. Fixiert werden die Dichtungselemente innerhalb des Rahmenelementes in einem durch die Rahmenteile ausgebildeten Innenraum des Rahmenelementes mittels einer Presspassung. Durch die Presspassung ist es nicht notwendig, dass die Dichtungselemente in einer zusätzlichen Aufnahme angeordnet werden müssen, welche in dem Innenraum des Rahmenelementes positioniert wird. Dadurch, dass die Dichtungselemente in dem Innenraum zu einem Rahmenteil und/oder einem weiteren Dichtungselement unmittelbar angrenzend angeordnet sind, kann die Anzahl eventuell zusätzlich notwendiger Bauteile, wie eine zusätzliche Aufnahme für die Dichtungselemente, somit auf null reduziert werden. Das einzelne oder die mehreren Dichtungselemente dienen somit dazu, den Innenraum des Rahmenelementes dichtend auszufüllen, so dass kein Spalt zwischen dem Rahmenelement und dem Dichtungselement und auch zwischen den Dichtungselementen untereinander mehr vorhanden ist.

Die Kabeldurchführung gemäß der Erfindung zeichnet sich ferner dadurch aus, dass ein oder mehrere der Dichtungselemente eine in Verlängerung der Durchgangsöffnung an dem Grundkörper angeformte konusförmige Kabeltülle aufweisen, wobei die konusförmige Kabeltülle stufenförmig abgesetzte Bereiche mit unterschiedlich großen Durchmessern aufweist. Die konusförmige Kabeltülle kann durch Abtrennen einzelner stufenförmig abgesetzter Bereich optimal an den Durchmesser des einzuführenden Kabels angepasst werden, so dass das Kabel gut abgedichtet in der Durchgangsöffnung des Dichtungselementes angeordnet werden kann. Das Kabel kann somit von unten entlang der Längsachse des Dichtungselementes unmittelbar in die Durchführungsöffnung des Dichtungselementes eingefügt werden. Es ist somit nicht mehr notwendig eine schlitzförmige Öffnung an dem Dichtungselement vorzusehen und das Kabel seitlich in das Dichtungselement einzufügen. Durch ein Abtrennen, insbesondere ein Abschneiden, der stufenförmig abgesetzten Bereiche auf den passenden Durchmesser des Kabels ist eine durchmessertolerante und prozesssichere Montage eines Kabels in einem Dichtungselement möglich. Das Anordnen des Kabels in dem Dichtungselement kann nunmehr bereits bei dem Kabelkonfektionär erfolgen, bevor das Dichtungselement in das Rahmenelement eingesetzt wird. Fehlmontagen durch Verwenden eines nicht zu dem Kabeldurchmesser passenden Dichtungselementes durch den Anwender selber können dadurch verhindert werden. Die Montage der Kabeldurchführung gemäß der Erfindung kann dadurch zudem gegenüber der Montage von bekannten Kabelverschraubungen wesentlich einfacher, schneller und zuverlässiger erfolgen.

Nach einer bevorzugten Ausgestaltung der Kabeldurchführung weist der Grundkörper ein in die Durchgangsöffnung eingesetztes rohrförmiges Stabilisierungselement auf. Das rohrförmige Stabilisierungselement kann aus einem formstabilen Kunststoff oder auch aus einem Metall ausgebildet sein. Das Stabilisierungselement wirkt mechanisch stabilisierend, indem der von dem Rahmenelement auf das Dichtungselement, insbesondere auf den Grundkörper des Dichtungselenmentes, wirkende Dichtungsdruck zur Ausbildung der Presspassung im Bereich der Durchgangsöffnung, durch welche das Kabel hindurchgeführt wird, von dem Stabilisierungselement aufgenommen wird, um zu verhindern, dass der Dichtungsdruck von dem Rahmenelement auf das Kabel übertragen wird.

Weiter ist es bevorzugt vorgesehen, dass das Dichtungselement eine Kabelzugentlastung aufweist, wobei die Kabelzugentlastung an dem Grundkörper oder an dem rohrförmigen Stabilisierungselement ausgebildet ist. Die Kabelzugentlastung kann beispielsweise durch einen Steg und einer an dem Steg angeformten Lasche ausgebildet sein, wobei der Steg an dem Grundkörper oder an dem rohrförmigen Stabilisierungselement angeformt ist. An der Lasche kann dann beispielsweise ein Kabelbinder, welcher um den Außenumfang des Kabels herum geführt wird, angeordnet werden, um eine Zugentlastung für das Kabel auszubilden.

Das Dichtungselement ist vorzugsweise aus einem thermoplastischen Kunststoff oder einem Elastomer ausgebildet. Bei einer Ausbildung des Dichtungselementes aus einem thermoplastischen Kunststoff, wie beispielsweise Styrol-Ethylen-Butylen-Styrol (SEBS), kann eine gute Säuren- und Laugenbeständigkeit, sowie ein gute Alkoholbeständigkeit des Dichtungselementes erreicht werden. Bei einer Ausbildung des Dichtungselementes aus einem Elastomer, insbesondere einem Vulkanisat, wie beispielsweise Nitril-Butadien-Kautschuk (NBR), zeichnet sich das Dichtungselement durch eine geringe plastische Verformung und eine gute Beständigkeit gegen Kohlenwasserstoffe, Öle, Kraftstoffe und Fette aus. Insgesamt zeichnet sich das Dichtungselement vorzugsweise durch eine hohe elastische Verformbarkeit aus, damit die Dichtungselemente durch die Rahmenelemente komprimiert werden können, um hierdurch eine Presspassung auszubilden.

Zur Befestigung des Dichtungselementes in dem Innenraum des Rahmenelementes ist es bevorzugt vorgesehen, dass der Grundkörper eines Dichtungselementes einen ersten Befestigungsbereich zum Befestigen des Grundkörpers des Dichtungselementes an einem benachbart zu diesem angeordneten Grundkörper eines weiteren Dichtungselementes und/oder zum Befestigen des Grundkörpers des Dichtungselementes an einem Rahmenteil aufweist, wobei der erste Befestigungsbereich ein nach außen gewölbtes, von der Seitenfläche des Grundkörpers des Dichtungselementes abstehendes Stegelement aufweist. Beim Befestigen des Dichtungselementes kann sich das Stegelement beispielsweise in eine Seitenfläche eines Grundkörpers eines benachbart angeordneten Dichtungselementes aufgrund der Elastizität des Materials des Dichtungselementes eindrücken, so dass hier zur Befestigung des Dichtungselementes eine Reibhaftung mittels des Stegelementes zwischen benachbart zueinander angeordneten Dichtungselementen ausgebildet wird.

Der Grundkörper eines Dichtungselementes kann ferner einen zweiten Befestigungsbereich zum Befestigen des Grundkörpers des Dichtungselementes an einem benachbart zu diesen angeordneten Grundkörper eines weiteren Dichtungselementes und/oder zum Befestigen des Grundkörpers des Dichtungselementes an einem Rahmenteil aufweisen, wobei der zweite Befestigungsbereich eine an dem Grundkörper angeformte Platte mit ein oder mehreren Ausnehmungen aufweist. Die ein oder mehreren Ausnehmungen können entsprechende Auswölbungen aufnehmen, welche an einem Rahmenteil oder einem benachbart angeordneten Dichtungselement ausgebildet sind.

Weiter kann der Grundkörper eines Dichtungselementes einen dritten Befestigungsbereich zum Befestigen des Grundkörpers des Dichtungselementes an einem benachbart zu diesem angeordneten Grundkörper eines weiteren Dichtungselementes und/oder zum Befestigen des Grundkörpers des Dichtungselementes an einem Rahmenteil aufweisen, wobei der dritte Befestigungsbereich eine an dem Grundkörper angeformte Platte mit ein oder mehreren Auswölbungen aufweist. Die ein oder mehreren Auswölbungen können in an einem Rahmenteil oder einem benachbart angeordneten Dichtungselement ausgebildeten Ausnehmungen eingreifen.

Gemäß einer weiter bevorzugten Ausgestaltung der Kabeldurchführung ist es vorgesehen, dass die Rahmenteile über Schrauben miteinander verbunden sind. Beim Verbinden der Rahmenteile mittels Schrauben werden die Dichtungselemente zwischen den Rahmenteilen komprimiert, um ein Presspassung zwischen den Rahmenteilen und den Dichtungselementen auszubilden, wodurch eine hohe Dichtigkeit der Kabeldurchführung erreicht wird. Die mittels Schrauben miteinander verbindbaren Rahmenteile sind vorzugsweise aus einem Kunststoff, wie beispielsweise Polyamid (PA6.6), ausgebildet.

Alternativ zu dem Verbinden der Rahmenteile über Schrauben, kann es auch vorgesehen sein, dass die Rahmenteile über ein gelenkig an einem Rahmenteil angeordnetes Verspannelement miteinander verbunden sind. Durch das Verbinden der Rahmenteile mittels eines gelenkig an einem Rahmenteil angeordneten Verspannelementes kann die Handhabung zur Montage der Kabeldurchführung gegenüber der Verbindung mittels Schrauben vereinfacht werden, da insbesondere zum Verbinden hierbei kein weiteres Werkzeug, wie beispielsweise ein Schraubendreher, notwendig ist. Bei einem Verbinden der Rahmenteile mittels eines Verspannelementes miteinander kann ebenfalls erreicht werden, dass die zwischen den Rahmenteilen angeordneten Dichtungselemente komprimiert werden, um eine Presspassung zwischen den Rahmenteilen und den Dichtungselementen auszubilden, wodurch eine hohe Dichtigkeit der Kabeldurchführung erreicht wird. Vorzugsweise sind zwei Verspannelemente an sich gegenüberliegenden Querseitenflächen des Rahmenelementes angeordnet, wobei die Verspannelemente eine Verlängerung des Rahmenelementes in seiner Längsausdehnung ausbilden, jedoch vorzugsweise nicht die Höhe des Rahmenelementes beeinflussen. Die mittels des Verspannelementes miteinander verbindbaren Rahmenteile können ebenfalls aus einem Kunststoff, beispielsweise Polyamid (PA6.6), ausgebildet sein, wobei hierbei vorzugsweise Metalleinleger in dem Kunststoff zur Stabilisierung der Rahmenteile angeordnet sind. Weiter ist es auch möglich, die Rahmenteile aus Aluminium, wie beispielsweise AlSi12, auszubilden.

Nachfolgend wird die Erfindung unter Bezugnahme auf die anliegenden Zeichnungen anhand bevorzugter Ausführungsformen näher erläutert.

Es zeigen:
- Fig. 1: eine schematische Darstellung einer Kabeldurchführung gemäß einer ersten Ausführungsform der Erfindung,
- Fig. 2: eine schematische Darstellung eines Schnittes durch ein Dichtungselement mit einem Stabilisierungselement gemäß einer möglichen Ausgestaltung der Erfindung,
- Fig. 3: eine schematische Darstellung einer Kabeldurchführung gemäß einer zweiten Ausführungsform der Erfindung,
- Fig. 4: eine schematische Darstellung eines Dichtungselementes gemäß der Erfindung,
- Fig. 5: eine weitere schematische Darstellung eines Dichtungselementes gemäß der Erfindung,
- Fig. 6: eine weitere schematische Darstellung eines Dichtungselementes gemäß der Erfindung,
- Fig. 7: eine weitere schematische Darstellung eines Dichtungselementes gemäß der Erfindung, und
- Fig. 8: eine schematische Schnittdarstellung des in Fig. 2 gezeigten Dichtungselementes ohne ein Stabilisierungselement, und
- Fig. 9: eine schematische Darstellung eines Schnittes durch ein Dichtungselement mit einem Stabilisierungselement gemäß einer weiteren möglichen Ausgestaltung der Erfindung.

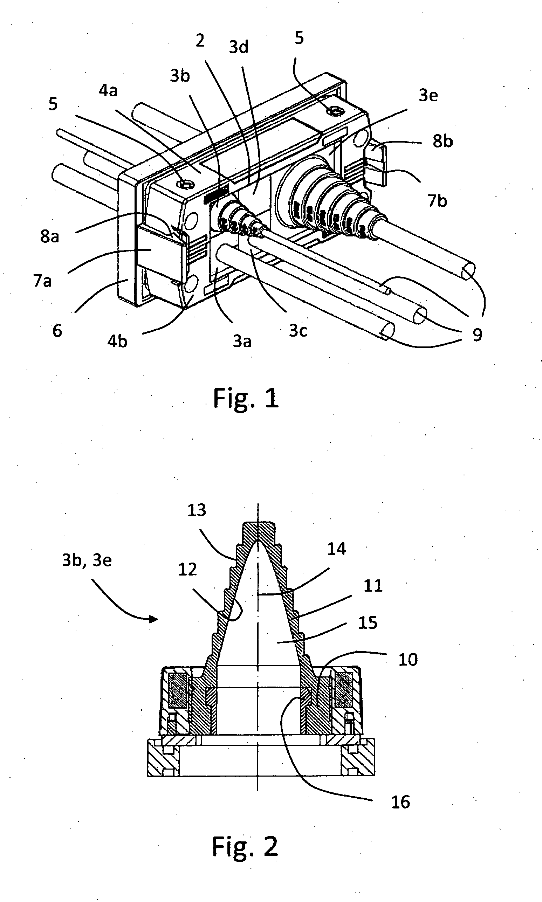

Fig. 1 zeigt eine erste Ausführungsform einer Kabeldurchführung gemäß der Erfindung. Die Kabeldurchführung ist aus einem Rahmenelement 1 und mehreren in einem Innenraum 2 des Rahmenelementes 1 angeordneten Dichtungselementen 3a, 3b, 3c, 3d, 3e ausgebildet, wobei durch die Dichtungselemente 3a, 3b, 3c, 3e jeweils ein Kabel 9 hindurchgeführt ist. Das Rahmenelement 1 weist eine rechteckförmige Form auf. Das Rahmenelement 1 ist aus zwei Rahmenteilen 4a, 4b ausgebildet, welche bei der in Fig. 1 gezeigten Ausführungsform über Schrauben 5 miteinander verbunden sind. Die zwei Rahmenteile 4a, 4b umschließen den Innenraum 2 des Rahmenelementes 1. Die Dichtungselemente 3a, 3b, 3c, 3d, 3e werden somit von den Rahmenteilen 4a, 4b eingerahmt, so dass die Dichtungselemente 3a, 3b, 3c, 3d, 3e zwischen den Rahmenteilen angeordnet sind. Jedes Dichtungselement 3a, 3b, 3c, 3d, 3e ist somit in dem Innenraum 2 des Rahmenelementes 1 zu einem Rahmenteil 4a, 4b und/oder einem weiteren Dichtungselement 3a, 3b, 3c, 3d, 3e angrenzend angeordnet. Die nebeneinander angeordneten Dichtungselemente 3a, 3b, 3c, 3d, 3e bilden somit ebenfalls eine Rechteckform aus. Die Dichtungselemente 3a, 3b, 3c, 3d, 3e werden im Wesentlichen durch eine Presspassung in dem Rahmenelement 1 gehalten, wobei die Presspassung durch die Schrauben 5 beim Verbinden der Rahmenteilen 4a, 4b aufgebracht wird. Das Rahmenelement 1 wird zusammen mit den darin angeordneten Dichtungselementen 3a, 3b, 3c, 3d, 3e an einer Wand 6, beispielsweise einer Wand eines Schaltschrankes, im Bereich eines Durchbruches in der Wand 6 befestigt. Hierfür kann das Rahmenelement 1 mittels Schrauben, hier nicht gezeigt, und einem Verrastungsmechanismus an der Wand 6 befestigt werden. Der Verrastungsmechanismus ist hier in Form von zwei Rastarmen 7a, 7b ausgebildet, welche das Rahmenelement 1 mittels Rasthaken 8a, 8b hintergreifen und an der Wand 6 halten.

Fig. 2 zeigt eine mögliche Ausführungsform für ein Dichtungselement 3b, 3e, wie es auch bei zwei der in Fig. 1 gezeigten Dichtungselemente vorgesehen ist. In Fig. 2 ist das Dichtungselement 3b, 3e in einer Schnittdarstellung gezeigt. Das Dichtungselement 3b, 3e ist aus einem Grundkörper 10 und einer an dem Grundkörper 10 angeformten konusförmigen Kabeltülle 11 ausgebildet. Der Grundkörper 10 und die Kabeltülle 11 sind einstückig miteinander ausgebildet. Der Grundkörper 10 weist eine rechteckförmig ausgebildete Außenumfangsfläche auf, wie dies auch in Fig. 1 zu erkennen ist. Die konusförmige Kabeltülle 11 weist eine kegelförmige Innenfläche 12 und eine Außenfläche 13, die mehrere stufenförmig abgesetzte Bereiche mit unterschiedlich großen Durchmessern aufweist, auf. Um ein dichtes Anliegen des Dichtungselementes 3b, 3e an einem Kabel 9 zu erreichen, können ein oder mehrere der stufenförmig abgesetzten Bereiche der konusförmigen Kabeltülle 11 entsprechend dem Außendurchmesser des in das Dichtungselement 3b, 3e eingeführten Kabels 9 abgetrennt werden.

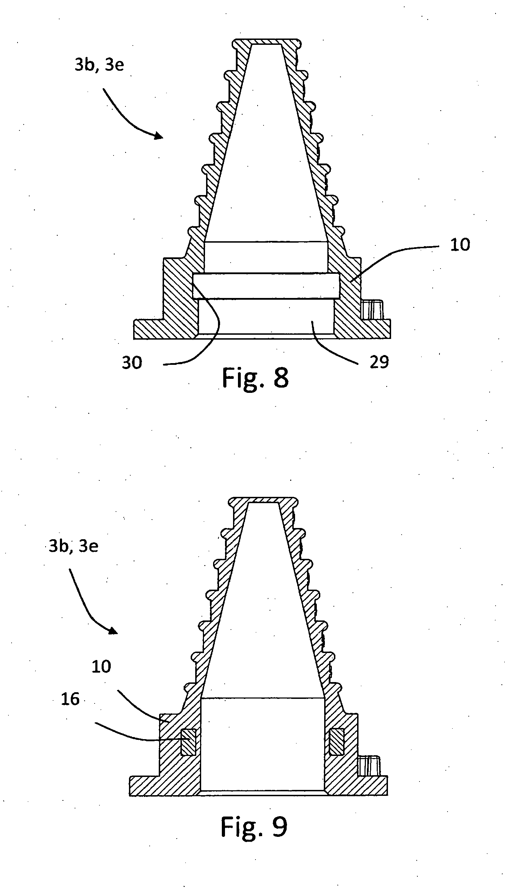

Innerhalb des Dichtungselementes 3b, 3e, entlang der Längsachse 14 des Dichtungselementes 3b, 3e erstreckt sich eine Durchgangsöffnung 15, über welche das Kabel 9 durch das Dichtungselement 3b, 3e hindurchgeführt wird, wie dies in Fig. 1 gezeigt ist. Im Bereich des Grundkörpers 10 ist die Durchgangsöffnung 15 kreisrund ausgebildet und im Bereich der konusförmigen Kabeltülle 11 ist die Durchgangsöffnung 15 kegelförmig ausgebildet. Im Bereich der Durchgangsöffnung 15 ist in dem Grundkörper 10 ein rohrförmiges Stabilisierungselement 16 angeordnet, welches entlang eines bestimmten Bereiches in dem Grundkörper 10 die Außenwandung der Durchgangsöffnung 15 ausbildet. In Fig. 8 ist dieses Dichtungselement 3b, 3e ohne ein Stabilisierungselement 16 gezeigt, wobei hier ein Aufnahmeraum 29 innerhalb des Grundkörpers 10 des Dichtungselementes 3b, 3e zu erkennen ist, innerhalb welchem das Stabilisierungselement 16 eingesetzt werden kann. Der Aufnahmeraum 29 weist eine ringförmige Nut 30 auf, welche an der Innenfläche des Grundkörpers 10 ausgebildet ist. In der ringförmigen Nut 30 kann das Stabilisierungselement 16 zur Befestigung in dem Aufnahmeraum 29 des Grundkörpers 10 einhaken.

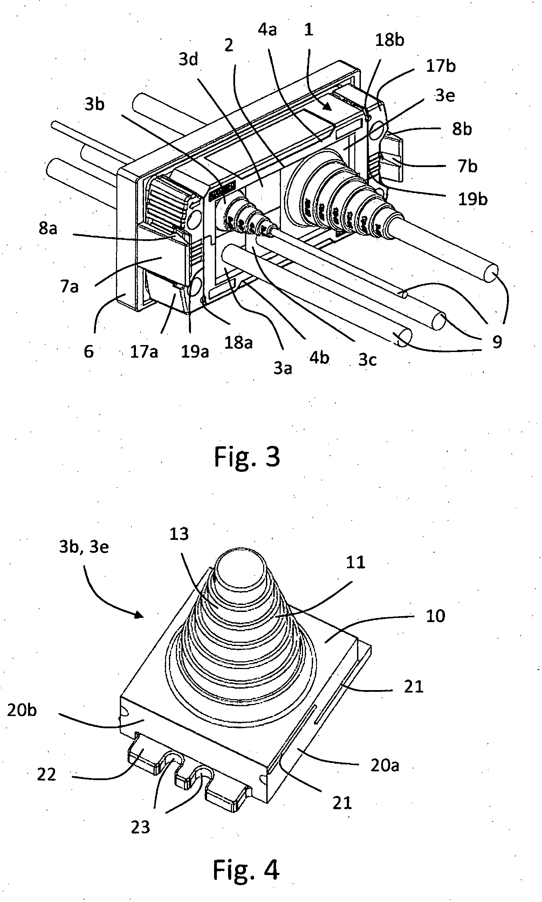

In Fig. 3 ist eine zweite Ausführungsform einer Kabeldurchführung gemäß der Erfindung gezeigt. Die in Fig. 3 gezeigte Ausführungsform entspricht im Wesentlichen der in Fig. 1 gezeigten Ausführungsform, wobei ein Unterschied lediglich in der Ausbildung der Verbindung der Rahmenteile 4a, 4b miteinander liegt. Bei der in Fig. 3 gezeigten Ausführungsform werden die beiden Rahmenteile 4a, 4b nicht mittels Schrauben miteinander verbunden, sondern über zwei Verspannelemente 17a, 17b die jeweils über ein Gelenk 18a, 18b schwenkbeweglich an einem der beiden Rahmenteile 4a, 4b angeordnet sind. Die beiden Verspannelemente 17a, 17b sind an sich gegenüberliegenden Querseitenflächen 19a, 19b des Rahmenelementes 1 angeordnet, wobei die Verspannelemente 17a, 17b eine Verlängerung des Rahmenelementes 1 in seiner Längsausdehnung ausbilden, jedoch nicht die Höhe des Rahmenelementes 1 beeinflussen. Zum Lösen der beiden Rahmenteile 4a, 4b voneinander werden die Verspannelemente 17a, 17b von der jeweiligen Querseitenfläche 19a, 19b des Rahmenelementes 1 weg verschwenkt. Zum Verbinden der beiden Rahmenteile 4a, 4b miteinander werden die Verspannelemente 17a, 17b wieder zu der jeweiligen Querseitenfläche 19a, 19b des Rahmenelementes 1 hin verschwenkt. Die Betätigung der Verspannelemente 17a, 17b kann per Hand, ohne der Zuhilfenahme eines Werkzeuges erfolgen.

In den Fig. 4 - 7 ist ein wie bereits in den Fig. 1 bis 3 gezeigtes Dichtungselement 3b, 3e mit einem Grundkörper 10 und einer konusförmigen Kabeltülle 11 in verschiedenen Ansichten gezeigt.

Fig. 4 zeigt das Dichtungselement 3b, 3e in einer perspektivischen Draufsicht auf die Oberseite des Dichtungselementes 3b, 3e. Dabei ist zu erkennen, dass an einer Seitenfläche 20a des Grundkörpers 10 ein erster Befestigungsbereich mit zwei Stegelementen 21 ausgebildet ist. Ferner ist an einer zweiten Seitenfläche 20b des Grundkörpers 10 ein zweiter Befestigungsbereich ausgebildet, welcher eine an dem Grundkörper 10 angeformte Platte 22 mit zwei Ausnehmungen 23 aufweist. Mittels dieser beiden an den jeweiligen Seitenflächen 20a, 20b ausgebildeten Befestigungsbereichen kann das Dichtungselement 3b, 3e an dem Rahmenelement 1 bzw. den Rahmenteilen 4a, 4b des Rahmenelementes 1 und/oder an benachbart angeordneten Dichtungselementen 3a, 3b, 3c, 3d, 3e befestigt werden.

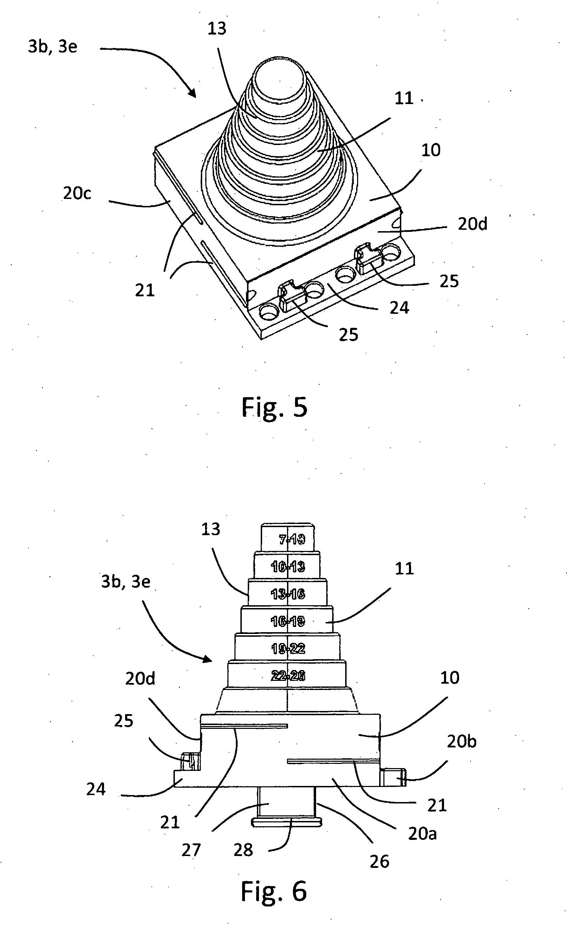

Fig. 5 zeigt ein weiteres Dichtungselement 3a, 3e in einer perspektivischen Draufsicht auf die Oberseite des Dichtungselementes 3b, 3e. Das hier gezeigte Dichtungselement 3b, 3e weist eine Seitenfläche 20c des Grundkörpers 10 auf, an welcher ebenfalls ein erster Befestigungsbereich ausgebildet ist, welcher zwei Stegelemente 21 aufweist. An einer weiteren Seitenfläche 20d des Grundkörpers 10 ist ein dritter Befestigungsbereich ausgebildet, welcher eine an dem Grundkörper 10 angeformte Platte 24 mit zwei Auswölbungen 25 aufweist, die in Ausnehmungen eines benachbart angeordneten Dichtungselementes 3a, 3b, 3c, 3d, 3e und/oder der Rahmenteile 4a, 4b des Rahmenelementes 1 eingreifen können.

In Fig. 6 ist ein Dichtungselement 3b, 3e in einer Draufsicht auf eine Längsseitenfläche des Dichtungselementes 3b, 3e gezeigt. Hierbei ist zu erkennen, dass die stufenförmig abgesetzten Bereiche an der Außenfläche 13 der konusförmigen Kabeltülle 11 mit Durchmesserangaben gekennzeichnet sind, welche den Außendurchmessern eines einzuführenden Kabels 9 entsprechen. Hierdurch kann der Kabelkonfektionär schnell und leicht erkennen, welche stufenförmig abgesetzten Bereiche er abtrennen muss, damit das einzuführende Kabel 9 dicht innerhalb des Dichtungselementes 3b, 3e angeordnet werden kann.

Der Grundkörper 10 weist bei der in Fig. 6 gezeigten Ausführungsform an seinen Seitenflächen 20a, 20b, 20d jeweils unterschiedliche Befestigungsbereiche auf, wobei an der Seitenfläche 20a zwei Stegelemente 21, an der Seitenfläche 20b eine Platte 22 mit Ausnehmungen und an der Seitenfläche 20 d eine Platte 24 mit Auswölbungen 25 ausgebildet sind.

Ferner ist in Fig. 6 eine Kabelzugentlastung 26 mit einem Steg 27, an dessen freien Ende eine nach außen zeigende Lasche oder Haken 28 ausgebildet ist, zu erkennen, welche von der Unterseite des Dichtungselementes 3b, 3e herausragt.

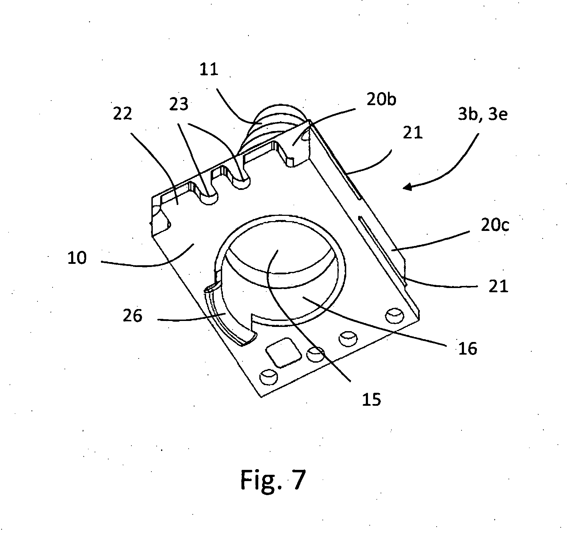

In Fig. 7 ist das in Fig. 6 gezeigte Dichtungselement 3b, 3e in einer perspektivischen Ansicht auf die Unterseite des Dichtungselementes 3b, 3e gezeigt. Dabei ist zu erkennen, dass die Kabelzugentlastung 26 einteilig mit dem rohrförmigen Stabilisierungselement 16 ausgebildet ist.

In Fig. 9 ist eine weitere Ausführungsform für ein Dichtungselement 3b, 3e mit einem rohrförmigen Stabilisierungselement 16 gezeigt, wobei hier das Stabilisierungselement 16 von dem Material des Dichtungselementes 3b, 3e umspritzt ist. Bei dieser Ausgestaltung kann das Dichtungselement 3b, 3e zusammen mit dem Stabilisierungselement 16 auch in einem Zweikomponentenspritzgussverfahren hergestellt sein.

**Bezugszeichenliste**

| | |
|---|---|
| Rahmenelement | 1 |
| Innenraum | 2 |
| Dichtungselement | 3a, 3b, 3c, 3d, 3e |
| Rahmenteil | 4a, 4b |
| Schraube | 5 |
| Wand | 6 |
| Rastarm | 7a, 7b |
| Rasthaken | 8b |
| Kabel | 9 |
| Grundkörper | 10 |
| Konusförmige Kabeltülle | 11 |
| Innenfläche | 12 |
| Außenfläche | 13 |
| Längsachse | 14 |
| Durchgangsöffnung | 15 |
| Stabilisierungselement | 16 |
| Verspannelement | 17a, 17b |
| Gelenk | 18a, 18b |
| Querseitenfläche | 19a, 19b |
| Seitenfläche | 20a, 20b, 20c, 20d |
| Stegelement | 21 |
| Platte | 22 |
| Ausnehmung | 23 |
| Platte | 24 |
| Auswölbung | 25 |
| Kabelzugentlastung | 26 |
| Steg | 27 |
| Lasche | 28 |
| Aufnahmeraum | 29 |
| Ringförmige Nut | 30 |

## Patentansprüche

1. Kabeldurchführung, mit einem aus mindestens zwei Rahmenteilen (4a, 4b) ausgebildeten Rahmenelement (1), welches einen durch die Rahmenteile (4a, 4b) abgegrenzten Innenraum (2) ausbildet, wobei in dem Innenraum (2) ein oder mehrere Dichtungselemente (3a, 3b, 3c, 3d, 3e) angeordnet sind, welche einen Grundkörper (10) mit jeweils einer Durchgangsöffnung (15) zur Durchführung eines Kabels (9) aufweisen, wobei die ein oder mehreren Dichtungselemente (3a, 3b, 3c, 3d, 3e) in dem Innenraum (2) an einem Rahmenteil (4a, 4b) und/oder einem weiteren Dichtungselement (3a, 3b, 3c, 3d, 3e) angrenzend angeordnet sind und durch Ausbildung einer Presspassung in dem Rahmenelement (1) fixiert sind, wobei ein oder mehrere der Dichtungselemente (3b, 3e) eine in Verlängerung der Durchgangsöffnung (15) an dem Grundkörper (10) angeformte konusförmige Kabeltülle (11) aufweisen, wobei die konusförmige Kabeltülle (11) stufenförmig abgesetzte Bereiche mit unterschiedlich großen Durchmessern aufweist.

2. Kabeldurchführung nach Anspruch 1, **dadurch gekennzeichnet, dass** der Grundkörper (10) ein in die Durchgangsöffnung (15) eingesetztes rohrförmiges Stabilisierüngselement (16) aufweist.

3. Kabeldurchführung nach Anspruch 1 oder 2, **dadurch gekennzeichnet, dass** ein oder mehrere der Dichtungselemente (3b, 3e) eine Kabelzugentlastung (26) aufweisen, wobei die Kabelzugentlastung (26) an dem Grundkörper (10) oder an dem rohrförmigen Stabilisierungselement (16) ausgebildet ist.

4. Kabeldurchführung nach einem der Ansprüche 1 bis 3, **dadurch gekennzeichnet, dass** ein oder mehrere der Dichtungselemente (3b, 3e) aus einem thermoplastischen Kunststoff oder einem Elastomer ausgebildet sind.

5. Kabeldurchführung nach einem der Ansprüche 1 bis 4, **dadurch gekennzeichnet, dass** der Grundkörper (10) eines Dichtungselementes (3b, 3e) einen ersten Befestigungsbereich zum Befestigen des Grundkörpers (10) des Dichtungselementes (3b, 3e) an einem benachbart zu diesem angeordneten Grundkörper (10) eines weiteren Dichtungselementes (3a, 3b, 3c, 3d, 3e) und/oder zum Befestigen des Grundkörpers (10) des Dichtungselementes (3b, 3e) an einem Rahmenteil (4a, 4b) aufweist, wobei der erste Befestigungsbereich ein Stegelement (21) aufweist.

6. Kabeldurchführung nach einem der Ansprüche 1 bis 5, **dadurch gekennzeichnet, dass** der Grundkörper (10) eines Dichtungselementes (3b, 3e) einen zweiten Befestigungsbereich zum Befestigen des Grundkörpers (10) des Dichtungselementes (3b, 3e) an einem benachbart zu diesem angeordneten Grundkörper (10) eines weiteren Dichtungselementes (3a, 3b, 3c, 3d, 3e) und/oder zum Befestigen des Grundkörpers (10) des Dichtungselementes (3b, 3e) an einem Rahmenteil (4a, 4b) aufweist, wobei der zweite Befestigungsbereich eine an dem Grundkörper (10) angeformte Platte (22) mit ein oder mehreren Ausnehmungen (23) aufweist.

7. Kabeldurchführung nach einem der Ansprüche 1 bis 6, **dadurch gekennzeichnet, dass** der Grundkörper (10) eines Dichtungselementes (3b, 3e) einen dritten Befestigungsbereich zum Befestigen des Grundkörpers (10) des Dichtungselementes (3b, 3e) an einem benachbart zu diesem angeordneten Grundkörper (10) eines weiteren Dichtungselementes (3a, 3b, 3c, 3d, 3e) und/oder zum Befestigen des Grundkörpers (10) des Dichtungselementes (3b, 3e) an einem Rahmenteil (4a, 4b) aufweist, wobei der dritte Befestigungsbereich eine an dem Grundkörper (10) angeformte Platte (24) mit ein oder mehreren Auswölbungen (25) aufweist.

8. Kabeldurchführung nach einem der Ansprüche 1 bis 7, **dadurch gekennzeichnet, dass** die Rahmenteile (4a, 4b) über Schrauben (5) miteinander verbunden sind.

9. Kabeldurchführung nach einem der Ansprüche 1 bis 7, **dadurch gekennzeichnet, dass** die Rahmenteile (4a, 4b) über ein gelenkig an einem Rahmenteil (4a, 4b) angeordnetes Verspannelement (17a, 17b) miteinander verbunden sind.

10. Verfahren zur Montage einer Kabeldurchführung, umfassend die Schritte:
- Bereitstellen eines Dichtungselementes (3b, 3e), welches einen Grundkörper (10) mit einer Durchgangsöffnung (15) aufweist, wobei in Verlängerung der Durchgangsöffnung (15) an dem Grundkörper (10) eine konusförmige Kabeltülle (11) angeformt ist, welche stufenförmig abgesetzte Bereiche mit unterschiedlich großen Durchmessern aufweist,
- Kürzen der konusförmigen Kabeltülle (11) in Abhängigkeit des Außendurchmessers eines in das Dichtungselement (3b, 3e) durch die Durchgangsöffnung (15) einzuführenden Kabels (9) durch Abtrennen von ein oder mehreren der stufenförmig abgesetzten Bereiche,
- Einführen des Kabels (9) in das Dichtungselement (3b, 3e) durch die Durchgangsöffnung (15) des Dichtungselementes (3b, 3e),
- Anordnen des mit dem Kabel (9) versehenen Dichtungselementes (3b, 3e) an einem Rahmenteil (4a, 4b), und
- Verbinden des Rahmenteiles (4a, 4b) mit einem oder mehreren weiteren Rahmenteilen (4a, 4b) zu einem Rahmenelement (1), so dass das mit dem Kabel (9) versehene Dichtungselement (3b, 3e) in einem durch die Rahmenteile (4a, 4b) abgegrenzten Innenraum (2) des Rahmenelementes (1) angeordnet ist und durch Ausbilden einer Presspassung in dem Rahmenelement (1) gehalten ist.

## Claims

1. A cable feedthrough, comprising a frame element (1) consisting of at least two frame parts (4a, 4b), said element forming an inner chamber (2) bounded by the frame parts (4a, 4b), wherein one or more sealing elements (3a, 3b, 3c, 3d, 3e) are arranged in the inner chamber (2), which comprise a base body (10) each with a passage opening (15) through which a cable (9) is fed, wherein the one or more sealing elements (3a, 3b, 3c, 3d, 3e) are arranged in the inner chamber (2) adjacent to a frame part (4a, 4b) and/or to another sealing element (3a, 3b, 3c, 3d, 3e) and are fixed in the frame element (1) by forming a press fit, wherein one or more of the sealing elements (3b, 3e) comprises a conical cable bushing (11) that is formed on the base body (10) along the extension of the passage opening (15) and the conical cable bushing (11) comprises gradated stepped regions with different diameters.

2. The cable feedthrough according to Claim 1, **characterized in that** the base body (10) comprises a tubular stabilizing element (16) inserted into the passage opening (15).

3. The cable feedthrough according to Claim 1 or 2, **characterized in that** one or more of the sealing elements (3b, 3e) has a cable strain relief (26), where the cable strain relief (26) is formed on the base body (10) or on the tubular stabilizing element (16).

4. The cable feedthrough according to any one of Claims 1 to 3, **characterized in that** one or more of the sealing elements (3b, 3e) is composed of a thermoplastic synthetic material or an elastomer.

5. The cable feedthrough according to any one of Claims 1 to 4, **characterized in that** the base body (10) of a sealing element (3b, 3e) has a first securing area for securing the base body (10) of the sealing element (3b, 3e) to a base body (10) of a further sealing element (3a, 3b, 3c, 3d, 3e) arranged adjacent to this, and/or for securing the base body (10) of the sealing element (3b, 3e) to a frame part (4a, 4b), wherein the first securing area comprises a web element (21).

6. The cable feedthrough according to any one of Claims 1 to 5, **characterized in that** the base body (10) of a sealing element (3b, 3e) has a second securing area for securing the base body (10) of the sealing element (3b, 3e) to a base body (10) of a further sealing element (3a, 3b, 3c, 3d, 3e) arranged adjacent to this, and/or for securing the base body (10) of the sealing element (3b, 3e) to a frame part (4a, 4b), wherein the second securing area has a plate (22) formed on the base body (10) and having one or more recesses (23).

7. The cable feedthrough according to any one of Claims 1 to 6, **characterized in that** the base body (10) of a sealing element (3b, 3e) has a third securing area for securing the base body (10) of the sealing element (3b, 3e) to a base body (10) of a further sealing element (3a, 3b, 3c, 3d, 3e) arranged adjacent to this, and/or for securing the base body (10) of the sealing element (3b, 3e) to a frame part (4a, 4b), wherein the third securing area has a plate (24) formed on the base body (10) and having one or more recesses (25).

8. The cable feedthrough according to any one of Claims 1 to 7, **characterized in that** the frame parts (4a, 4b) are connected to each other using screws (5).

9. The cable feedthrough according to any one of Claims 1 to 7, **characterized in that** the frame parts (4a, 4b) are connected to each other via a clamping element (17a, 17b) mounted in a hinged manner on a frame part (4a, 4b).

10. A method for assembling a cable feedthrough, comprising the steps:
- provision of a sealing element (3b, 3e), which has a base body (10) with a passage opening (15), wherein along the extension of the passage opening (15) a conical cable bushing (11) is formed on the base body (10), which has gradated stepped regions with different diameters,
- shortening of the conical cable bushing (11) in accordance with the outer diameter of a cable (9) to be inserted into the sealing element (3b, 3e) through the passage opening (15) by removal of one or more of the gradated stepped regions,
- insertion of the cable (9) into the sealing element (3b, 3e) through the passage opening (15) of the sealing element (3b, 3e),
- arrangement of the sealing element (3b, 3e) fitted with the cable (9) on a frame part (4a, 4b), and
- connection of the frame part (4a, 4b) having one or more other frame parts (4a, 4b) to a frame element (1), so that the sealing element (3b, 3e) fitted with the cable (9) is arranged in an inner chamber (2) of the frame element (1) bounded by the frame parts (4a, 4b), and is held in the frame element (1) by the formation of a press fit.

## Revendications

1. Traversée de câbles avec un premier élément de cadre (1) formé par au moins deux parties de cadre (4a, 4b), lequel forme un espace intérieur (2) délimité par les parties de cadre (4a, 4b), dans laquelle, dans l'espace intérieur (2), un ou plusieurs éléments d'étanchéité (3a, 3b, 3c, 3d, 3e) sont disposés, lesquels présentent un corps de base (10) avec respectivement une ouverture de passage (15) pour faire passer un câble (9), dans laquelle ce ou ces éléments d'étanchéité (3a, 3b, 3c, 3d, 3e) sont disposés dans l'espace intérieur (2) de manière adjacente à une partie de cadre (4a, 4b) et/ou à un autre élément d'étanchéité (3a, 3b, 3c, 3d, 3e) et sont fixés dans l'élément de cadre (1) grâce à la formation d'un ajustement serré, dans laquelle un ou plusieurs des éléments d'étanchéité (3b, 3e) présentent un passe-câbles (11) conique formé sur le corps de base (10) en prolongement de l'ouverture de passage (15), dans laquelle le passe-câbles conique (11) présente des zones décalées de manière étagée avec des diamètres de différentes tailles.

2. Traversée de câbles selon la revendication 1, **caractérisée en ce que** le corps de base (10) présente un élément de stabilisation (16) tubulaire placé dans l'ouverture de passage (15).

3. Traversée de câbles selon la revendication 1 ou 2, **caractérisée en ce qu'**un ou plusieurs des éléments d'étanchéité (3b, 3e) présentent une décharge de traction de câble (26), dans laquelle la décharge de traction de câble (26) est formée sur le corps de base (10) ou sur l'élément de stabilisation tubulaire (16).

4. Traversée de câbles selon l'une des revendications 1 à 3, **caractérisée en ce qu'**un ou plusieurs des éléments d'étanchéité (3b, 3e) sont réalisés en un plastique thermoplastique ou un élastomère.

5. Traversée de câbles selon l'une des revendications 1 à 4, **caractérisée en ce que** le corps de base (10) d'un élément d'étanchéité (3b, 3e) présente une première zone de fixation pour la fixation du corps de base (10) de l'élément d'étanchéité (3b, 3e) sur un corps de base (10) disposé au voisinage de celui-ci d'un autre élément d'étanchéité (3a, 3b, 3c, 3d, 3e) et/ou pour la fixation du corps de base (10) de l'élément d'étanchéité (3b, 3e) sur une partie de cadre (4a, 4b), dans laquelle la première zone de fixation présente un élément de nervure (21).

6. Traversée de câbles selon l'une des revendications 1 à 5, **caractérisée en ce que** le corps de base (10) d'un élément d'étanchéité (3b, 3e) présente une deuxième zone de fixation pour la fixation du corps de base (10) de l'élément d'étanchéité (3b, 3e) sur un corps de base (10) disposé au voisinage de celui-ci d'un autre élément d'étanchéité (3a, 3b, 3c, 3d, 3e) et/ou pour la fixation du corps de base (10) de l'élément d'étanchéité (3b, 3e) sur une partie de cadre (4a, 4b), dans laquelle la deuxième zone de fixation présente une plaque (22) formée sur le corps de base (10) avec un ou plusieurs évidements (23).

7. Traversée de câbles selon l'une des revendications 1 à 6, **caractérisée en ce que** le corps de base (10) d'un élément d'étanchéité (3b, 3e) présente une troisième zone de fixation pour la fixation du corps de base (10) de l'élément d'étanchéité (3b, 3e) sur un corps de base (10) disposé au voisinage de celui-ci d'un autre élément d'étanchéité (3a, 3b, 3c, 3d, 3e) et/ou pour la fixation du corps de base (10) de l'élément d'étanchéité (3b, 3e) sur une partie de cadre (4a, 4b), dans laquelle la troisième zone de fixation présente une plaque (24) formée sur le corps de base (10) avec un ou plusieurs bombements (25).

8. Traversée de câbles selon l'une des revendications 1 à 7, **caractérisée en ce que** les parties de cadre (4a, 4b) sont reliées ensemble par l'intermédiaire de vis (5).

9. Traversée de câbles selon l'une des revendications 1 à 7, **caractérisée en ce que** les parties de cadre (4a, 4b) sont reliées ensemble par l'intermédiaire d'un élément de déformation (17a, 17b) disposé de manière articulée sur une partie de cadre (4a, 4b).

10. Procédé pour le montage d'une traversée de câbles, comprenant les étapes suivantes :
- la mise à disposition d'un élément d'étanchéité (3b, 3e) qui présente un corps de base (10) avec une ouverture de passage (15), dans lequel un passe-câbles conique (11) est formé sur le corps de base (10) en prolongement de l'ouverture de passage (15), lequel présente des zones décalées de manière étagée avec des diamètres de tailles différentes,
- le raccourcissement du passe-câbles conique (11) en fonction du diamètre extérieur d'un câble (9) à insérer dans l'élément d'étanchéité (3b, 3e) à travers l'ouverture de passage (15) par détachement d'une ou plusieurs zones décalées de manière étagée,
- l'insertion du câble (9) dans l'élément d'étanchéité (3b, 3e) à travers l'ouverture de passage (15) de l'élément d'étanchéité (3b, 3e),
- l'agencement de l'élément d'étanchéité (3b, 3e) muni du câble (9) sur une partie de cadre (4a, 4b), et
- la liaison entre la partie de cadre (4a, 4b) et une ou plusieurs autres parties de cadre (4a, 4b) pour donner un élément de cadre (1), de sorte que l'élément d'étanchéité (3b, 3e) muni du câble (9) est disposé dans un espace intérieur (2) délimité par les parties de cadre (4a, 4b) de l'élément de cadre (1) et est maintenu dans l'élément de cadre (1) par formation d'un ajustement serré.
